# EUROPÄISCHE PATENTANMELDUNG

(11) **EP 0 630 836 A1**
(43) Veröffentlichungstag der Anmeldung: **28.12.1994**
(21) Anmeldenummer: 94250156.0
(22) Anmeldetag: 15.06.1994
(51) Int. Cl.: B65G 47/84

(54) **Vorrichtung zum Überführen von Lasträgern zwischen winkelig zueinander angeordneten Förderbahnen**

(30) Priorität: 22.06.1993 DE 4321491
(71) Anmelder: MANNESMANN Aktiengesellschaft, D-40213 Düsseldorf (DE)
(72) Erfinder: Becker, Klaus, Dr., D-58300 Wetter (DE); Wenke, Klaus, D-45541 Sprockhövel (DE); Ostholt, Rüdiger, D-58300 Wetter (DE)
(74) Vertreter: Meissner, Peter E., Dipl.-Ing.

(57) **Zusammenfassung**

Die Erfindung betrifft eine Vorrichtung zum Überführen von Lastträgern zwischen winkelig zueinander angeordneten Förderbahnen. Die Vorrichtung weist mindestens ein durch einen Antrieb in den Förderweg der Lastträger auf der ersten Förderbahn und in Richtung der zweiten Förderbahn bewegbares Führungselement zum Überführen der Lastträger in die zweite Förderbahn auf. Um eine sichere Überführung der Lastträger bei gleichzeitig hoher Überführungsleistung zu ermöglichen, wird vorgeschlagen, daß das Führungselement als Mitnehmer (7) ausgebildet ist, der für den Überführungsvorgang formschlüssig in eine Ausnehmung (Nut 14) einfahrbar ist, die an dem Lastträger (4) angeordnet ist.

## Beschreibung

Die Erfindung betrifft eine Vorrichtung zum Überführen von Lastträgern zwischen winkelig zueinander angeordneten Förderbahnen gemäß dem Oberbegriff des Patentanspruches 1.

Aus der DE 32 41 100 A1 ist eine Vorrichtung zum Ausschleusen einzelner Stückgüter von einem Zuführband auf eine angrenzende abzweigende Förderbahn bekannt. Der Ausschleusvorgang erfolgt durch eine Abweisrolle, von der das jeweils auszuschleusende Stückgut seitlich von dem Zuführband in Richtung der angrenzenden Förderbahn herausgedrückt wird. Die Abweisrollen sind an den Enden eines dreiarmigen Sternrades angeordnet, das um eine vertikale Achse drehbar neben dem Zuführband gelagert ist. Zur Unterstützung des Ausschleusvorganges ist an dem Beginn der Abzweigförderbahn eine um eine horizontale Achse angetriebene und gummierte Transportrolle vorgesehen, von der das ausgeschleuste Stückgut erfaßt und in Richtung der Abzweigförderbahn weitertransportiert wird.

Diese Ausschleusvorrichtung erweist sich als nachteilig, da das Sternrad mit den Abweisrollen eine große Baubreite benötigt und somit eine unmittelbar benachbarte Anordnung einer weiteren Förderbahn nicht möglich ist. Außerdem wird die Zuverlässigkeit des Ausschleusvorganges von den Reibungsverhältnissen zwischen der Auflagefläche des Stückgutes und der Oberfläche des Förderbandes beeinflußt, so daß es vorkommen kann, daß bei ungünstigen Reibungsverhältnissen keine Ausschleusung des Stückgutes erfolgt.

Des weiteren ist aus der EP 0094012 B1 eine Umlenkvorrichtung zum wahlweisen Umlenken von Gegenständen von einem Gurtförderer auf einen dazu winkelig angeordneten Rollenförderer bekannt. Diese Umlenkvorrichtung besteht im wesentlichen aus mehreren angetriebenen Rollenpaaren, die auf die Breite des Gurtförderers verteilt nebeneinander und im Abzweigungsbereich zwischen den in zwei Abschnitte geteilten Gurtförderer angeordnet sind. Jedes Rollenpaar besteht aus zwei in Förderrichtung des Gurtförderers gesehen hintereinander und voneinander beabstandet angeordneten Rollen, die in die Förderebene der Gurtförderer hineinragen. Zum Umlenken der geförderten Gegenstände sind die Rollenpaare aus ihrer parallel zur Förderrichtung des Gurtförderers ausgerichteten Lage in Richtung der abzweigenden Rollenbahn verschwenkbar.

Auch diese Umlenkvorrichtung erweist sich als nachteilig, da die Umlenkleistung der Vorrichtung durch den erforderlichen Rückschwenkvorgang der Rollenpaare begrenzt ist und die Gurtförderbahn für die Umlenkvorrichtung unterbrochen werden muß.

Der Erfindung liegt die Aufgabe zugrunde, eine Vorrichtung zum Überführen von Lastträgern zwischen winkelig zueinander angeordneten Förderbahnen zu schaffen, die eine sichere Überführung der Lastträger bei gleichzeitig hoher Überführungsleistung ermöglicht.

Diese Aufgabe wird bei einer Vorrichtung zum Überführen von Lastträgern gemäß dem Oberbegriff des Anspruches 1 durch die kennzeichnenden Merkmale des Anspruches 1 gelöst. Vorteilhafte Ausgestaltungen der Erfindung sind in den Unteransprüchen 2 - 12 angegeben.

Der Grundgedanke der Erfindung besteht darin, die Lastträger, insbesondere Behälter für Gepäckstücke, mit einer Ausnehmung zu versehen, in die ein Mitnehmer der Überführungsvorrichtung zwischen zwei Förderbahnen formschlüssig eingreifen kann. Die formschlüssige Verbindung während des Überführungsvorganges zwischen dem Mitnehmer und dem Lastträger gewährleistet dessen sichere Überführung, da diese Überführungsart weitestgehend unabhängig von den wechselnden Reibungsverhältnissen zwischen Lastträger und Förderbahn bzw. -gurt ist. Durch die Anordnung der Ausnehmung im Boden bzw. der Aufstandsfläche des Lastträgers, wodurch entsprechend der Mitnehmer von unten zur Überführung in die Ausnehmung einfährt, ist eine Anordnung der Überführungsvorrichtung unterhalb der Förderbahnen möglich und ragt daher besonders raumsparend nicht seitlich über die Kontur der Förderbahnen hinaus. Hierdurch wird eine platzsparende und eng aneinander angrenzende Anordnung mehrerer Förderbahnen nebeneinander möglich. Als besonders vorteilhaft erweist sich die Ausbildung der Ausnehmung als die Stirnseiten des Lastträgers verbindende und in dessen Längsrichtung verlaufende Nut, da hierdurch diese auch für die Führung des Lastträgers außerhalb der Überführungsvorrichtung verwendet werden kann. Außerdem wird durch die längliche Ausbildung des Mitnehmers, der während des Überführungsvorganges leicht innerhalb der Nut verschwenkt, eine formschlüssige, insbesondere klemmende Zweipunkt-Auflage des Mitnehmers an der Nut erzielt und somit eine sichere formschlüssige Verbindung zwischen dem Mitnehmer und dem Lastträger gewährleistet. Die formschlüssige Verbindung zwischen dem Mitnehmer und der Nut wird verbessert, wenn der Mitnehmer zweiteilig ist, wobei die Teile insbesondere plattenförmig ausgebildet und in Überführungsrichtung hintereinander und voneinander beabstandet angeordnet sind. Durch den Abstand der beiden Teile der Mitnehmer zueinander, der vorzugsweise kleiner als 1/3 der Länge des Lastträgers ist, wird der Abstand zwischen den zwei Punkten, mit denen der Mitnehmer an der Nut anliegt, vergrößert. Die Führung des Mitnehmers, ausgehend von der ersten Führungsbahn entlang einer kurvenförmigen Führungsschiene in Richtung der zweiten Führungsbahn, bietet die Möglichkeit, den Lastträger mit einer berechenbaren und vorgewählten Bahngeschwindigkeit in Richtung der zweiten Förderbahn zu führen. Wird die Führungsbahn abschnittweise bzw. kontinuierlich steigender Krümmung in Überführungsrichtung ausgebildet, ist ein nahezu ruckfreier Übergang von der ersten in die zweite Förderrichtung möglich. Außerdem kann somit gewährleistet werden, daß die Fliehkräfte, die auf die auf dem Lastträger angeordneten Gepäckstücke einwirken, nicht zu einem Abwerfen der Gepäckstücke führen. Des weiteren erweist sich als vorteilhaft, die Mitnehmer über ein als Kette ausgebildetes Zugmittel anzutreiben, wobei die Kette über Bolzen in in der Führungsschiene der Überführungsvorrichtung eingearbeitete Führungsnuten geführt ist. Diese Konstruktion erweist sich als kostengünstig und zugleich als geräuscharm. Die Ausbildung der Kette als handelsübliche Seiten-Bogen-Kette ermöglicht es, diese entlang der kurvenförmigen Führungsschiene zu führen.

Nachfolgend wird die Erfindung anhand einer Zeichnung näher erläutert. Es zeigt:
- Figur 1: eine Draufsicht auf einen Abzweigbereich von zwei Förderbahnen mit einer erfindungsgemäßen Überführungsvorrichtung,
- Figur 2: einen Schnitt von Figur 1 gemäß der Schnittlinie II-II aus dem Bereich der Überführungsvorrichtung,
- Figur 3: einen Schnitt von Figur 2 gemäß der Schnittlinie III-III,
- Figur 4: eine vergrößerte Ausschnittdarstellung von Figur 3 aus dem Bereich der Mitnehmer.

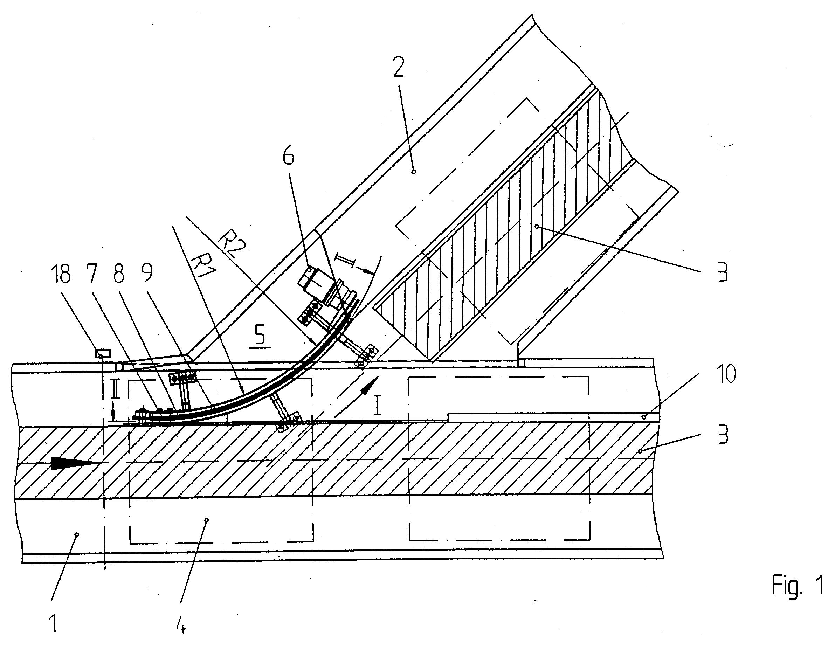

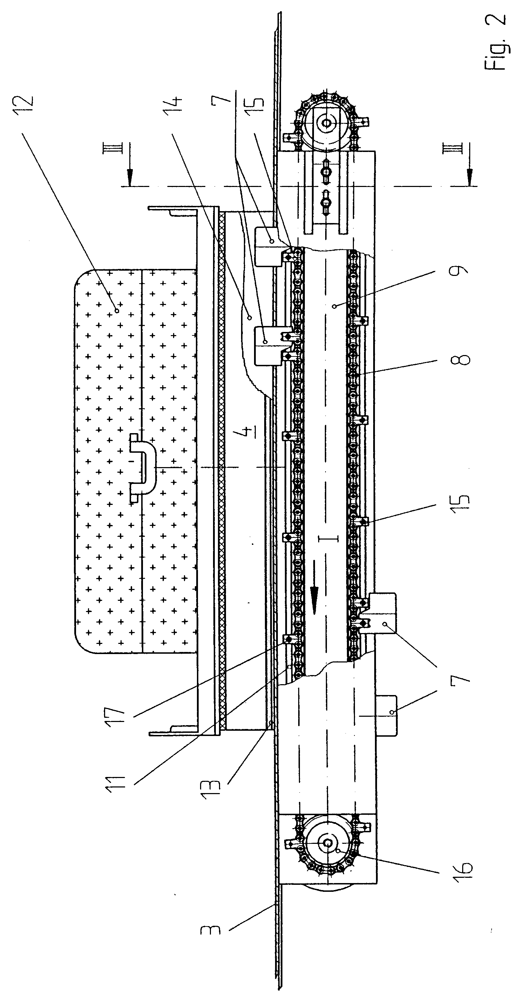

Die Figur 1 zeigt eine Draufsicht auf eine erste Förderbahn 1, an die eine zweite Förderbahn 2 unter einem Winkel von 45^{o} angrenzt. Die Förderbahnen 1, 2 sind als Gurtförderer ausgebildet, deren Fördergurt 3 eine Breite aufweist, die etwa der Hälfte der darauf zu transportierenden Lastträger 4 entspricht. Hierdurch werden die Lastträger 4 nur im mittleren Bereich ihrer Aufstandsfläche 13 (s. Fig. 2) auf dem Fördergurt 3 abgestützt. Zwischen der ersten Förderbahn 1 und der zweiten Förderbahn 2 ist eine Überführungsvorrichtung 5 für die Lastträger 4 angeordnet. Die Überführungsvorrichtung 5 besteht im wesentlichen aus einem als Elektromotor ausgebildeten Antrieb 6 für ein Führungselement, mit dem ein Lastträger 4 über eine formschlüssige Verbindung mit diesem von der ersten Förderbahn 1 auf die zweite Förderbahn 2 ausschleusbar ist. Das Führungselement 7 ist als Mitnehmer 7 ausgebildet, der ausgehend von einer Position seitlich neben dem Fördergut 3 der ersten Förderbahn 1 und dessen der zweiten Förderbahn 2 zugewandten Seite in Richtung des Beginns der zweiten Förderbahn 2 bewegbar ist. Der Mitnehmer 7 ist über ein insbesondere als Seitenbogen-Kette ausgebildetes und umlaufendes Zugmittel 8 mit dem Antrieb 6 verbunden. Das Zugmittel 8 ist entlang einer in Sinoidenform gekrümmten Führungsschiene 9 geführt, die somit auch den Weg des Mitnehmers 7 beim Ausschleusvorgang bestimmt. Die Führungsschiene 9 verläuft in Überführungsrichtung I gesehen am Anfang in etwa parallel zu dem Förderband 3, krümmt sich in verschiedenen Radien R1, R2 usw. sinoidenförmig im weiteren Verlauf von dem Förderband 3 der ersten Förderbahn 1 weg in Richtung der zweiten Förderbahn 2 und endet seitlich neben und vor dem Beginn des Förderbandes 3 der zweiten Förderbahn 2. Die zwei eingezeichneten Radien R1, R2 sind so bemessen, daß der Lastträger zunächst leicht und somit sanft aus der ursprünglichen Förderrichtung auf der ersten Förderbahn 1 in die Richtung der zweiten Förderbahn 2 und mit zunehmender Überführung stärker umgelenkt wird. Dieser Sachverhalt ist durch die Radien R1, R2 angedeutet, wobei dementsprechend R1 größer als R2 ist. Da die Krümmung der Führungsschiene 9 frei an die Anforderungen des Überführungsvorganges anpaßbar ist, wäre es auch möglich, am Ende der Überführungsbewegung der Mitnehmer 7 den Radius der Führungsschiene 9 wieder zu vergrößern, um den Übergang auf die anschließende Förderbahn 2 zu optimieren.

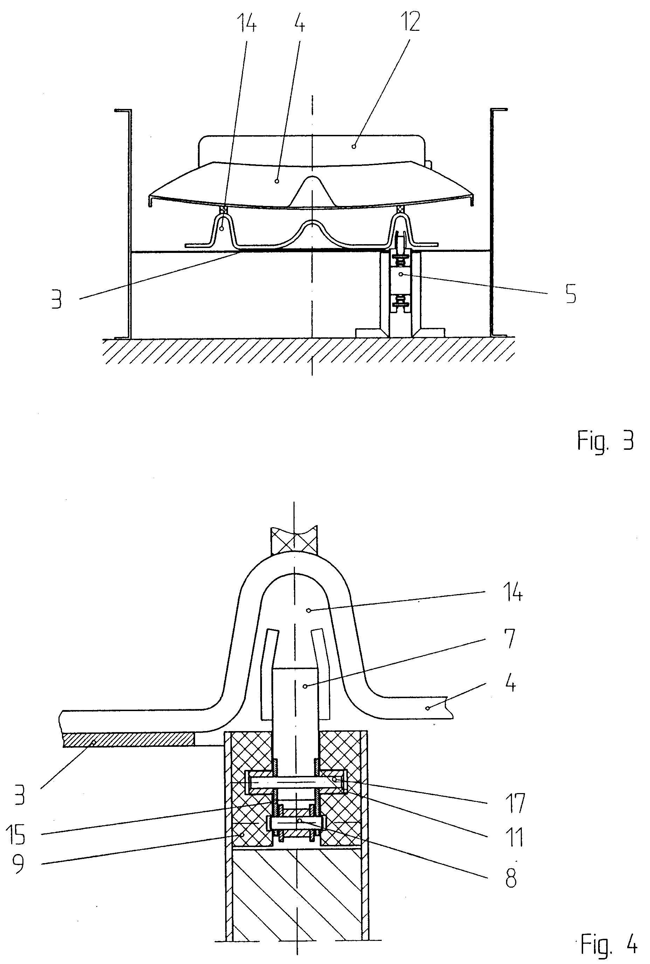

Außerdem ist der Figur 1 zu entnehmen, daß im Bereich in Überführungsrichtung gesehen hinter der Überführungsvorrichtung 5 auf der ersten Förderbahn 1 unmittelbar seitlich neben dem Fördergurt 3 angrenzend eine Führungsleiste 10 angeordnet ist. Diese Führungsleiste 10 dient einerseits zur Führung des Fördergurtes 3, damit dieser durch den zu überführenden Lastträger 4 nicht in Richtung des Mitnehmers 7 der Überführungsvorrichtung 5 gezogen wird. Andererseits wird durch diese Führungsleiste 10 der Lastträger 4, der eine als in Längsrichtung durchgehende Nut 14 (s. Fig. 3) im Bereich seiner Aufstandsfläche 13 ausgebildete Ausnehmung aufweist, geführt.

In Figur 2 ist ein Schnitt entlang der Führungsschiene 9 der Überführungsvorrichtung 5 gemäß der Schnittlinie II-II in Figur 1 dargestellt. Zusätzlich 1 ist in diese Figur ein Lastträger 4 eingezeichnet. Der Lastträger 4 ist vorzugsweise als Behälter ausgebildet, der zum Transport von Stückgütern, insbesondere Gepäckstücken 12, dient. Der Lastträger 4 weist in seiner Aufstandsfläche 13 keilförmig ausgebildete Nuten 14 auf, die in Längs- bzw. Hauptförderrichtung des Lastträgers 4 ausgerichtet sind und über die ganze Länge der Aufstandsfläche 13 des Lastträgers 4 durchgehen. Zur Überführung des Lastträgers 4 auf die abzweigende zweite Förderbahn 2 ist in die Nut 14 ein Mitnehmer 7, der aus zwei Teilen besteht, formschlüssig einfahrbar. Die Mitnehmerteile 7, deren Längserstreckung parallel zur Überführungsrichtung I ausgerichtet ist, sind vorzugsweise plattenförmig ausgebildet. Außerdem sind die Mitnehmerteile 7 in Überführungsrichtung I gesehen hintereinander und voneinander beabstandet über Befestigungslaschen 15 mit dem Zugmittel 8 verbunden. Der Abstand der Mitnehmerteile 7 zueinander ist kleiner als ein Drittel der Länge des Lastträgers 4. Das Zugmittel 8 ist endlos ausgebildet und jeweils an den Enden der Führungsschiene 9 über Umlenkräder 16 geführt. Im Verlauf des Zugmittels 8 sind weitere Befestigungslaschen 15 vorgesehen, die auf das umlaufende Zugmittel 8 bezogen nach außen gerichtet sind. An den Befestigungslaschen 15 ist jeweils in Bohrungen ein quer zur Führungsschiene 9 ausgerichteter Bolzen 17 gelagert, über dessen seitlich aus den Befestigungslaschen 15 herausragenden Enden das Zugmittel 8 in Führungsnuten 11 der Führungsschiene 9 geführt wird. Des weiteren ist der Figur 2 zu entnehmen, daß an dem Zugmittel 8 auf dessen Umfang gleichmäßig verteilt zwei Paare von Mitnehmern 7 angeordnet sind, um die Überführungsleistung durch Vermeidung einer Rückführungsbewegung für die Mitnehmer 7 zu erhöhen.

Die Figur 3 zeigt einen Schnitt von Figur 2 durch die Führungsschiene 9 der Überführungsvorrichtung 5 gemäß der Schnittlinie III-III. Zusätzlich ist die erste Förderbahn 1 im Querschnitt dargestellt, die Seitenwangen zur Führung der Lastträger 4 aufweist, die über eine Art Lasttisch miteinander verbunden sind, auf dem der Fördergurt 3 läuft. Dieser Figur ist eindeutig die Ausbildung des Lastträgers 4, dessen Aufstandsfläche 13 mit zwei im Seitenbereich der Aufstandsfläche 13 angeordneten Nuten 14 versehen ist, zu entnehmen. Der Abstand der beiden parallel zueinander ausgerichteten Nuten 14 ist größer als die Breite des Förderbandes 3 gewählt, so daß eine Führung der Lastträger 4 durch Führungsleisten 10 (s. Fig. 1) und deren Überführung durch Mitnehmer 7 möglich ist, ohne das Förderband 3 zu unterbrechen.

Aus der Figur 4, die einen vergrößerten Ausschnitt von Figur 3 aus dem Bereich des Mitnehmers 7 darstellt, ist besonders deutlich die Führung des Zugmittels 8 in den Führungsnuten 11 der Führungsschiene 9 zu entnehmen. Hierzu ist das Zugmittel 8 über Befestigungslaschen 15 mit einem daran gelagerten Bolzen 17 verbunden, dessen Enden jeweils in einer der zwie gegenüberliegend in die Führungsschiene 9 eingearbeiteten Führungsnuten 11 geführt sind.

Nachfolgend wird anhand eines Überführungsvorgangs eines Lastträgers 4 die Funktion der erfindungsgemäßen Überführungsvorrichtung 5 näher erläutert. Ein zum Ausschleusen bestimmter Lastträger 4, der auf der ersten Förderbahn 1 transportiert wird, erreicht kurz vor der Überführungsvorrichtung 5 einen neben der ersten Förderbahn 1 angeordneten Sensor 18, der über eine Zentralsteuerung den Antrieb 6 der Überführungsvorrichtung 5 steuert. Für den Fall, daß der Lastträger 4 auf den zweiten Förderweg 2 überführt werden soll, wird von dem Sensor 18 über die Zentralsteuerung der Antrieb 6 gestartet. Der Antrieb 6 wird hierbei so angefahren, daß die Mitnehmer 7 von unten in das hintere Drittel der Längsnut 14 des Lastträgers 4 einfahren. Der Mitnehmer 7 und das Förderband 3 der ersten Förderbahn 1 verlaufen zunächst am Beginn der Führungsschiene 9 der Überführungsvorrichtung 5 weitestgehend parallel. Anschließend wird der Mitnehmer 7 von dem Förderband 3 weg zunächst leicht und anschließend stärker in Richtung der Förderbahn geführt und hierdurch der in Überführungsrichtung I gesehen erste Mitnehmer an die linke Seitenwand der Nut 14 und der hintere Mitnehmer 7 an die rechte Seitenwand der Nut 14 formschlüssig angepreßt. Diese formschlüssige Verbindung der Mitnehmer 7 mit der Nut 14 wird durch den Angriff der Mitnehmer 7 im hinteren Drittel der Nut 14 und die dadurch entgegenwirkenden Trägheitskräfte des Lastträgers 4, der zunächst in Richtung der ersten Förderbahn 1 strebt, verstärkt. Von dem in Eingriff mit der Nut 14 stehenden Mitnehmern 7 wird der Lastträger 4 von dem Fördergurt 3 weg entlang der Führungsschiene 9 in Richtung des Beginnes der zweiten Förderbahn 2 gezogen und dessen Anfang von dem Fördergurt 3 der zweiten Förderbahn übernommen. Nachdem etwa 2/3 des Lastträgers 4 auf dem Fördergut 3 aufliegen, werden die Mitnehmer 7 nach unten aus der Nut 14 herausgefahren und wird der Lastträger auf der zweiten Förderbahn 2 weitergefördert.

Im Sinne der Erfindung kann der Lastträger 4 auch mit einer schlitzförmigen Ausnehmung, die in der vorderen Hälfte des Lastträgers endet, versehen sein und dementsprechend der Mitnehmer bolzenartig ausgeführt werden. Außerdem wäre auch eine hakenförmige Ausbildung des Mitnehmers, wobei die komplementäre Ausnehmung in einer Seitenwand des Lastträgers angeordnet wird, möglich.

### Bezugszeichenliste

- 1: erste Förderbahn
- 2: zweite Förderbahn
- 3: Fördergurt
- 4: Lastträger
- 5: Überführungsvorrichtung
- 6: Antrieb
- 7: Mitnehmer
- 8: Zugmittel
- 9: Führungsschiene
- 10: Führungsleiste
- 11: Führungsnuten
- 12: Gepäckstück
- 13: Aufstandsfläche
- 14: Nut
- 15: Befestigungslaschen
- 16: Umlenkräder
- 17: Bolzen
- 18: Sensor
- I: Überführungsrichtung

## Patentansprüche

1. Vorrichtung zum Überführen von Lastträgern zwischen winkelig zueinander angeordneten Förderbahnen, insbesondere von Behältern für Gepäckstücke zwischen winkelig zueinander angeordneten Gurtförderern, mit mindestens einem durch einen Antrieb in den Förderweg der Lastträger auf der ersten Förderbahn und in Richtung der zweiten Förderbahn bewegbaren Führungselement zum Überführen der Lastträger in die zweite Förderbahn,
dadurch gekennzeichnet,
daß das Führungselement als Mitnehmer (7) ausgebildet ist, der für den Überführungsvorgang formschlüssig in eine Ausnehmung (Nut 14) einfahrbar ist, die an dem Lastträger (4) angeordnet ist.

2. Vorrichtung nach Anspruch 1,
dadurch gekennzeichnet,
daß der Mitnehmer (7) während des Überführungsvorganges von unten in den Förderweg der ersten bzw. der zweiten Förderbahn (1,2) hineinragt und die Ausnehmung (Nut 14) für den Mitnehmer (7) in der Aufstandsfläche (13) des Lastträgers (4) angeordnet ist.

3. Vorrichtung nach Anspruch 1 oder 2,
dadurch gekennzeichnet,
daß die Ausnehmung als eine die Stirnseiten des Lastträgers (4) verbindende und in dessen Förderrichtung verlaufende Nut (14) ausgebildet ist und der Mitnehmer (7) in Überführungsrichtung (I) gesehen eine längliche Form aufweist.

4. Vorrichtung nach Anspruch 3,
dadurch gekennzeichnet,
daß der Mitnehmer (7) aus zwei Mitnehmerteilen besteht, die in Überführungsrichtung (I) gesehen hintereinander und voneinander beabstandet angeordnet sind und deren Abstand zueinander kleiner als 1/3 der Länge des Lastträgers (4) ist.

5. Vorrichtung nach einem oder mehreren der Ansprüche 1 bis 4,
dadurch gekennzeichnet,
daß die Mitnehmer (7) plattenförmig ausgebildet sind und mit ihrer Längserstreckung in Überführungsrichtung (I) ausgerichtet sind.

6. Vorrichtung nach einem oder mehreren der Ansprüche 1 bis 5,
dadurch gekennzeichnet,
daß der Mitnehmer (7) ausgehend von der ersten Führungsbahn (1) entlang einer kurvenförmigen Führungsschiene (9) in Richtung der zweiten Förderbahn (2) antreibbar ist.

7. Vorrichtung nach Anspruch 6,
dadurch gekennzeichnet,
daß der Mitnehmer (7) an einem Zugmittel (8) befestigt ist und das Zugmittel (8) umlaufend ausgebildet und an der Führungsschiene (9) geführt ist.

8. Vorrichtung nach Anspruch 6 oder 7,
dadurch gekennzeichnet,
daß das Zugmittel (8) als Kette ausgebildet ist, die mit mehreren über deren Umfang gleichmäßig verteilt angeordneten Bolzen (17) verbunden ist, die in in der Führungsschiene (9) angeordneten Führungsnuten (11) geführt sind.

9. Vorrichtung nach Anspruch 8,
dadurch gekennzeichnet,
daß die Kette eine Seitenbogen-Kette ist.

10. Verfahren nach einem oder mehreren der Ansprüche 6 bis 12,
dadurch gekennzeichnet,
daß die Führungsschiene (9) ausgehend von der ersten Förderbahn (1) in richtung der zweiten Förderbahn (2) kontinuierlich oder abschnittsweise zunehmend gekrümmt ist.

11. Vorrichtung nach einem oder mehreren der Ansprüche 1 bis 10,
dadurch gekennzeichnet,
daß die erste Förderbahn (1) ein Gurtförderer ist, dessen Fördergurt (3) eine Breite aufweist, die etwa der Hälfte der Breite der Lastträger (4) entspricht und die Nut (14) außerhalb des Teils der Aufstandsfläche (13) des Lastträgers (4) angeordnet ist, der auf dem Fördergut (3) ruht.

12. Vorrichtung nach Anspruch 11,
dadurch gekennzeichnet,
daß die Führungsschiene (9) für den Mitnehmer (7) auf der Seite des Fördergurtes (3) der ersten Förderbahn (1), die der abzweigenden zweiten Förderbahn (2) zugewandt ist und neben diesem Fördergurt (3) beginnt, in Richtung der zweiten Förderbahn (2) gekrümmt verläuft und im Bereich des Beginns eines Fördergurtes (3) der zweiten Förderbahn (2) sowie auf der der ersten Förderbahn (1) abgewandten Seite neben diesem Fördergurt (3) endet.
